# EUROPEAN PATENT APPLICATION

(11) **EP 0 982 927 A1**
(43) Date of publication of application: **01.03.2000**
(21) Application number: 99116630.7
(22) Date of filing: 25.08.1999
(51) Int. Cl.: H04N 1/32

(54) **Method of generating authentication-enabled electronic data**

(30) Priority: 28.08.1998 JP 24334598
(71) Applicant: Hitachi, Ltd., Chiyoda-ku, Tokyo 101-8010 (JP)
(72) Inventor: Nagai, Yasuhiko, Bunkyo-ku, Tokyo (JP); Susaki, Seiichi, Totsuka-ku, Yokohama-shi, Kanagawa-ken (JP); Yoshiura, Hiroshi, Bunkyo-ku, Tokyo (JP); Toyoshima, Hisashi, Hachioji-shi, Toyko (JP); Saito, Tsukasa, Suginami-ku, Tokyo (JP); Tsuchiyama, Cikako, Bunkyo-ku, Toyko (JP); Kikuta, Atsushi, Kashiwa-shi, Chiba-ken (JP)
(74) Representative: Strehl Schübel-Hopf & Partner

(57) **Abstract**

In an authentication-enabled electronic data generating method, strict authentication of the genuineness of electronic data is enabled, and the genuineness is visually expressed to users of electronic data. A digital signature is appended to authentication information for authenticating an electronic mark B 112 such as a Web page 109, a trademark or the like, and then the authentication information with the digital signal is embedded as an invisible digital watermark into an electronic mark A 111. Thereafter, the electronic mark A 111 which visually expresses the genuineness is embedded as a visible digital watermark into the electronic mark B 112.

## Description

### BACKGROUND OF THE INVENTION

### 1. Field of the Invention

The present invention relates to a technique of enabling authentication of genuineness of electronic data by using image data, and particularly to a technique of enabling strict authentication of genuineness of electronic data and also visually expressing genuineness of electronic data on the basis of an image represented by the image data. U.S. Patent Applications Serial Nos. 09/090,419 and 09/144,989, Japanese Patent Application No. Hei-10-226882 and Japanese Patent Application No. Hei-10-244719 are applications which are relevant to this application.

### 2. Description of Related Art

A technique called "digital signature" has been conventionally known as a technique enabling authentication of authenticity of electronic (digital) data.

The digital signature technique, developed to guarantee the authenticity of electronic data, combines public key cipher technology with one-way property functions.

In this technology, a pair of keys, a private key S and a public key V which satisfy g (f (n, S) V) = n and f(g (n, V), S) = n, is created first, where n represents data, and f and g represent functions. These formulae mean that data encrypted with the private key S may be decrypted by with the public key V and that, conversely, data encrypted with the public key V may be decrypted with the private key S. It should also be noted that it is virtually impossible to find the private key S from the public key V.

Once the private key S and the public key V are created, the creator passes the public key V to a partner and holds the private key S privately.

When the key creator sends data to the partner, the creator passes data to which a digital signature is attached. This digital signature is created by evaluating data with a predetermined one-way property function and then encrypting the resulting evaluation value with the private key S.

The one-way property function described above can calculate an evaluation value from data, but it is impossible to virtually calculate the original data from the evaluation value. In addition, it is necessary for the one-way property function used in creating a digital signature to return a unique bit string for each piece of unique data; that is, the probability of the function returning the same bit string to two or more pieces of data must be very small. An example of such functions is a one-way hash function which evaluates data and returns a bit string as the evaluation value of the data. The evaluation value h(D) calculated by the one-way hash function is called the hash value of D, where h is the one-way hash function and D is data.

Upon receiving data to which a digital signature is attached, the receiving partner evaluates the data with the one-way property function to obtain an evaluation value and then checks if the evaluation value matches the value generated by decrypting the digital signature using the public key V. When they match, it is verified that the digital signature was created by the holder of the private key S corresponding to the public key V and that the digital signature is for the data that was received.

Besides, there has been conventionally known a WWW system with a WWW (World Wide Web) server program and a Browser program, which uses a publicly-open network such as Internet or the like.

The WWW system is composed of at least one WWW server on which a WWW server program for publishing information runs and at least one client terminal on which a browser program for browsing published information runs. Data is transferred between the WWW server and the client terminal via the communication protocol called HTTP (Hyper Text Transfer Protocol).

To publish information on the WWW server, a server user must create a Web page containing data to be published. This page contains text data, image data, audio data, video data, and link data to other Web pages, all interconnected using a structure description language called HTML (Hyper Text Markup Language). Then, the user stores this Web page in a location (directory) in the WWW server so that it may be accessed from other computers (client terminals or other WWW servers).

To browse a published Web page from a client terminal using a browser program, a terminal user must type the URL (Uniform Resource Locator) of the Web page. Then, the Web page is sent from the WWW server to the client terminal. The text data, image data, and video data of the Web page are displayed on the client terminal screen. Audio data, if included in the page, is produced from the speaker connected to the client terminal.

The recent trend is that the WWW system like this is used not only as the communication means but also in business. One such application is an electronic commerce system which provides the user with information on goods using this WWW system.

In such an electronic commerce system, most vendors include into their web pages the image data, such as the logos of credit card companies, to allow the user to instantly select one of various payment methods. This is similar to a real-world (not a world such as the Internet) store where the logos of the credit card companies are put up on the counter or in the show window.

Sometimes, a Web page may also contain image data, such as logo marks indicating the Web page creator or an authentic individual or organization which has authorized the Web page, to allow a Web page user to instantly ascertain who has created the Web page or that the Web page has been authorized by the authentic individual or organization.

Further, as a technique of embedding information into image data is known a digital watermark technique disclosed in IBM System Journal Vol. 35, No. 3 & 4, 1996, pp. 313-336. According to this technique, information is embedded into image data so that variation of an image pattern represented by the image data cannot be visually recognized and the information embedded in the image data cannot be separated from the image data. The digital watermark technique with which the embedded information cannot be visually recognized from the image pattern represented by the image data having the information embedded therein is called as an "invisible digital watermark technique".

According to such an invisible digital watermark technique, it is expected that illegal use of image data can be prevented by embedding identification information of a manufacture or distributor into image data.

Furthermore, a digital watermark technique disclosed in U.S. Patent No. 5,530,759 is known as a technique of imitating traditional watermark for image data. According to this technique, the brightness of the image data represented by a specific image pattern is varied in accordance with a watermark image pattern representing information to be embedded to thereby generate image data which represents the specific image pattern and also represents slightly the watermark image pattern. In this case, it is impossible to separate the original specific image pattern and the watermark image pattern from the watermark embedded image data thus generated. Such a digital watermark technique that the embedded information can be visually recognized from the image pattern represented by the information-embedded image data is called as a "visible digital watermark technique".

According to such a visible digital watermark technique, the visibility of an original image pattern is prevented from being greatly damaged by the image pattern represented by the image data in which information is embedded, and an image pattern representing a manufacturer, a distributor or the like can be presented so as to be visually recognizable.

### SUMMARY OF THE INVENTION

According to the technique of enabling the genuineness of electronic data to be authenticated by the digital signature, it is so bothersome that not only the electronic data, but also the digital signature and the electronic data must be managed in combination with each other. Since the digital signature is invisible, the genuineness of the electronic data cannot be directly and visually expressed to a user of the electronic data.

On the other hand, according to the technique containing a logo mark into a Web page, since the logo mark can be simply copied and illegally used, it cannot be said that the genuineness of the electronic data can be authenticated by the logo mark.

Therefore, an object of the present invention is to enable the strict authentication of the genuineness of electronic data and visually express the genuineness of the electronic data for users of the electronic data.

In order to attain the above object, according to the present invention, there is provided a method of generating authentication-enabled electronic data, comprising the steps of: embedding digital-signature appended authentication information for authenticating the electronic data as an invisible digital watermark into a first image and applying a visually-recognizable alteration to the first image data embedded with the invisible digital watermark to generate a second image; and inserting the second image into the electronic data to generate the authentication-enabled electronic data.

According to the authentication-enabled electronic data generated by the above method, the genuineness of the electronic data can be strictly authenticated by the digital-signature appended authentication information embedded as the invisible digital watermark. Further, a desired mark such as a trademark or the like can be displayed by the second image contained in the display of the authentication-enabled electronic data, and the genuineness of electronic data which cannot be perfectly represented by only the normal display of a mark such as a trademark or the like can be visually represented by the alteration applied to the second image.

### DESCRIPTION OF THE DRAWINGS

Fig. 1 is a block diagram showing a configuration of a genuineness authentication system for digital contents according to a first embodiment of the present invention;
Fig. 2 is a block diagram showing a configuration of a mark-pasted content creating device according to the first embodiment of the present invention;
Fig. 3 is a block diagram showing a configuration of a content authentication device according to the first embodiment of the present invention;
Fig. 4 is a block diagram showing a configuration of an electronic computer usable to implement the mark-pasted content creating device and the content authentication device according to the first embodiment of the present invention;
Fig. 5 is a diagram showing a processing of the mark-pasted content creating device according to the first embodiment of the present invention;
Fig. 6 is a flowchart showing a procedure of the operation of the mark-pasted content creating device according to the first embodiment of the present invention;
Fig. 7 is a flowchart showing a procedure of the operation of the content authentication device according to the first embodiment of the present invention;
Fig. 8 is a flowchart showing a procedure of the operation of the mark-pasted content creating device according to a second embodiment of the present invention;
Fig. 9 is a diagram showing a processing of the mark-pasted content creating device according to the second embodiment of the present invention;
Fig. 10 is a flowchart showing a procedure of the operation of the content authentication device according to the second embodiment of the present invention;
Fig. 11 is a diagram showing a processing of the mark-pasted content creating device according to a third embodiment of the present invention;
Fig. 12 is a block diagram showing a configuration of the content authentication device according to a fourth embodiment of the present invention;
Fig. 13 is a flowchart showing a procedure of the operation of the mark-pasted content creating device according to the fourth embodiment of the present invention;
Fig. 14 is a diagram showing a processing of the mark-pasted content creating device according to the fourth embodiment of the present invention;
Fig. 15 is a flowchart showing a procedure of the operation of the content authentication device according to the fourth embodiment of the present invention; and
Fig. 16 is a diagram showing a processing of the mark-pasted content creating device according to a fifth embodiment of the present invention.

### DETAILED DESCRIPTION OF THE PREFERRED EMBODIMENTS

Preferred embodiments according to the present invention will be described hereunder with reference to the accompanying drawings.

A first embodiment of the present invention will be described by applying the present invention to a case where genuineness of a web page can be authenticated by electronic data.

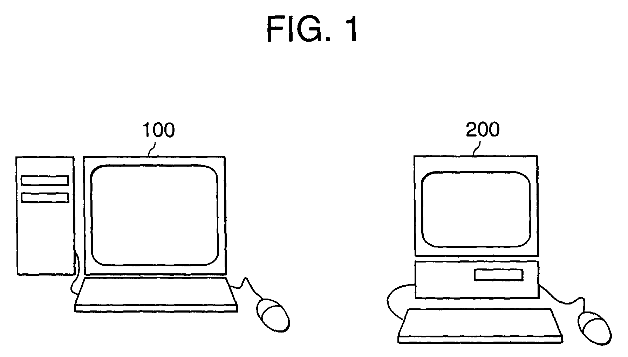

Fig. 1 shows a configuration of a genuineness authentication system of a digital content according to the first embodiment of the present invention.

As shown in Fig. 1, the genuineness authentication system of the digital content comprises a mark-pasted content generating device 100 and a content check device 200.

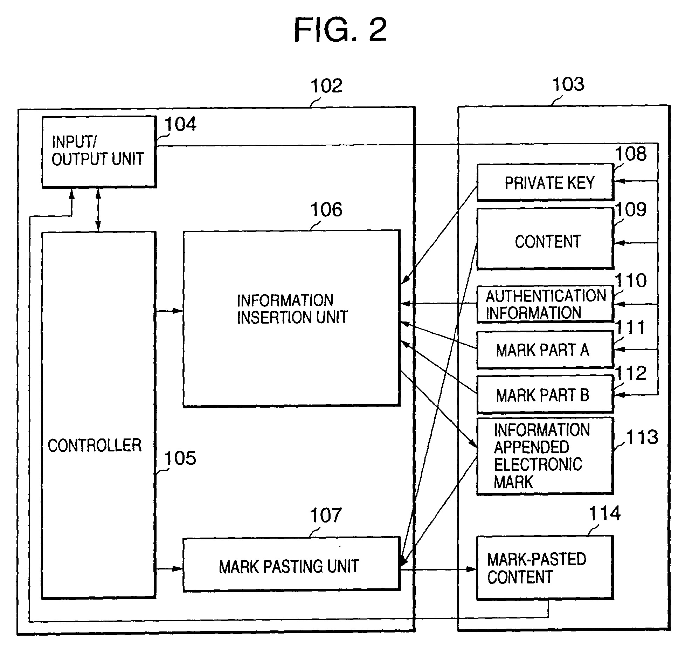

The mark-pasted content generating device 100 comprises an operating unit 102 and a storage unit 103, as shown in Fig. 2.

The operating unit 102 comprises an input/output unit 104 serving as an input/output interface to the external, an information insertion unit 106 for executing various processing such as digital signature processing, invisible digital watermark processing and visible digital watermark processing to generate an information-appended electronic mark in which authentication information is embedded, a mark pasting unit 107 for pasting the information-appended electronic mark to the content, and a controller 105 for controlling the operation of these processing. In the storage unit 103 are stored a content 109 whose genuineness is to be authenticated, authentication information 110 containing, feature information on the content (for example, URL of the content), information on an authentication source, effective term information, etc., private (secret) key information 108 of the authentication source for creating a digital signature, a mark part A 111 and a mark part B 112, information-appended electronic mark 113, a mark-pasted content 114 obtained by pasting the information-appended electronic mark 113 to the content 109.

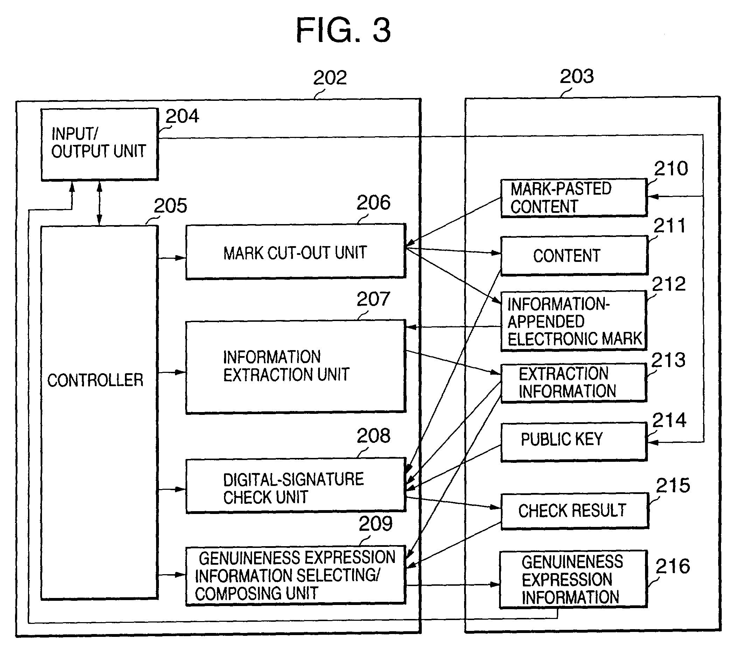

The content check device 200 comprises an operating unit 202 and a storage unit 203 as shown in Fig. 3.

The operating unit 202 comprises an input/output unit 204 serving as an input/output interface to the external, a mark cut-out unit 206 for cutting out the information-appended electronic mark portion from the mark-pasted content, an information extraction unit 207 for extracting digital-signature appended authentication information as extraction information from the information appended electronic mark, a digital signature check unit 208 for checking the digital signature of the extraction information and the authentication information, a genuineness expression information selecting/composing unit 209 for generating result notification information on the basis of the check results of the signature and the authentication information, and a controller 205 for controlling the operation of these processing. In the storage unit 203 are stored a mark-pasted content 210, a content 211 separated/extracted from the mark-pasted content 210, an information-appended electronic mark 212, extraction information 213, a public (open) key 214 of an authentication source to decrypt the digital signature, a check result 215 of the digital signature and the extraction authentication information, and genuineness expression information 216 as frame display information of a check result notification of the signature and the authentication information.

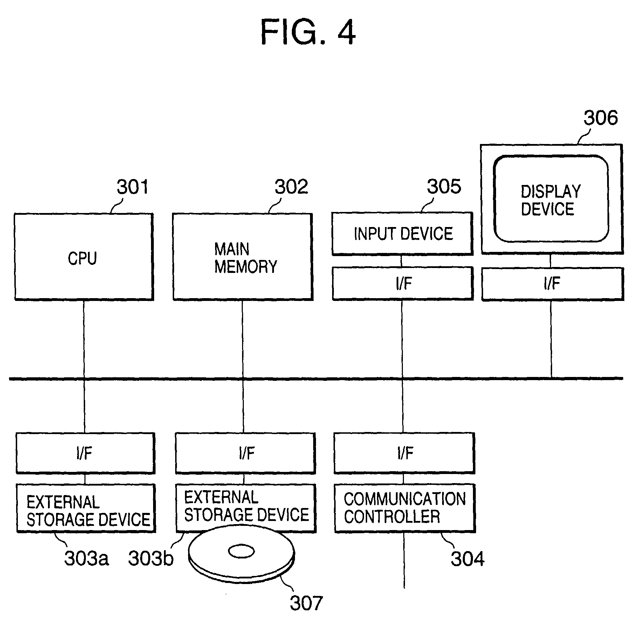

Here, as shown in Fig. 4, the mark-pasted content generating device 100 and the content check device 200 can be built up in an electronic computer having a general construction which includes a CPU 301, a main memory 302, an external storage device 303a serving as a hard disc device, another external storage device 303b, a communication controller 304, an input device 305 such as a keyboard or a pointing device and an output device 306 such as a display device.

In this case, the operating unit 102 of the mark-pasted content generating device 100 and each part of the operating unit 102 are implemented as processes embodied on the electronic computer by executing programs loaded into the main memory 302 by the CPU 301. In this case, the main memory 302 and the external storage devices 303a and 303b are used as the storage unit of the mark-pasted content generating device 100. Likewise, the operating unit 202 of the content check device 200 and each part of the operating unit 202 are implemented as processes embodied on the electronic computer by executing programs loaded into the main memory 302 by the CPU 301. In this case, the main memory 302 and the external storage device 303a and 303b are used as the storage unit 203 of the content check device 200.

The programs which are loaded into the main memory 302 and executed by the CPU 301 to construct the mark-pasted content generating device 100 and the content check device 200 on the electronic computer are stored in the external storage device 303a in advance, and they are loaded to the main memory 302 and executed by the CPU 301 as occasion demands. Alternatively, the programs may be directly loaded from a portable storage medium 307 through the external storage device 303b handling a portable storage medium 307 such as CD-ROM or the like and then executed by the CPU 301 as occasion demands. Or, the programs may be temporarily installed from the portable storage medium 307 through the external storage device 303b handling a portable storage medium onto the external storage device 303a such as a hard disc device, and then loaded to the main memory 302 and executed by the CPU 301 as occasion demands.

The mark-pasted content generating device 100 may be built up on the electronic computer in which an editor program for creating Web pages is actuated. In this case, the mark-pasted content generating device 100 shown in Fig. 2 may be implemented as a process of plug-in software supplying a function to the process of the editor program. In this case, the process of the plug-in software is started from the process of the editor program, and the process of the editor program takes a Web page under edition as a content and carries out the processing of the mark-pasted content generating device 100 as described later to create as a mark-pasted content a Web page to which an information-appended electronic mark is attached. The pasting of the information-appended electronic mark to the Web page is performed by inserting the description of URL of the information-appended electronic mark into the HTML description of the Web page by using a 〈IMG SRC〉 tag.

The content check device 200 may be built up on the electronic computer in which a browser program to browse the Web page is actuated. In this case, the content check device 200 shown in Fig. 3 may be implemented as the process of the plug-in software supplying the function to the process of the browser program. In this case, when the display of the information-appended electronic mark in the Web page is selected by the user, the process of the plug-in software is started from the process of the browser program, and the browser program cuts out the information-appended electronic mark selected by the user while setting the Web page under display as a mark-pasted content and then performs the processing of the content check device 200 described later to generate and display the genuineness expression information 216 as frame display information of the check result notification of the signature and the authentication information.

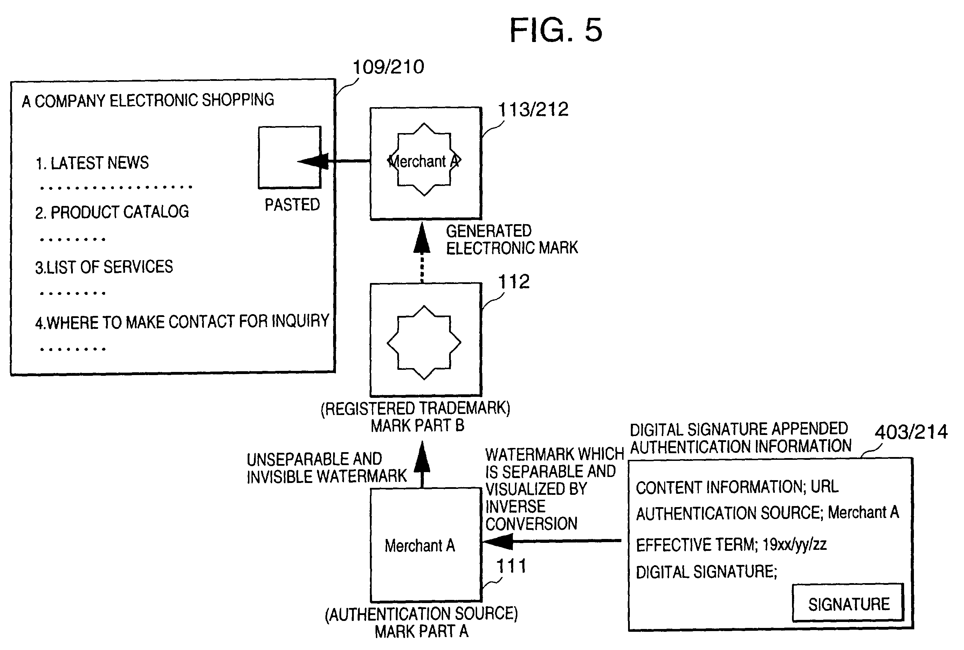

Next, the operation of the genuineness authentication system of the digital content according to the first embodiment will be described by applying this embodiment to a case where the content 109 whose genuineness is to be authenticated is a Web page of an electronic shopping on the Internet shown in Fig. 5.

First, the operation of the mark-pasted content generating device 100 will be first described.

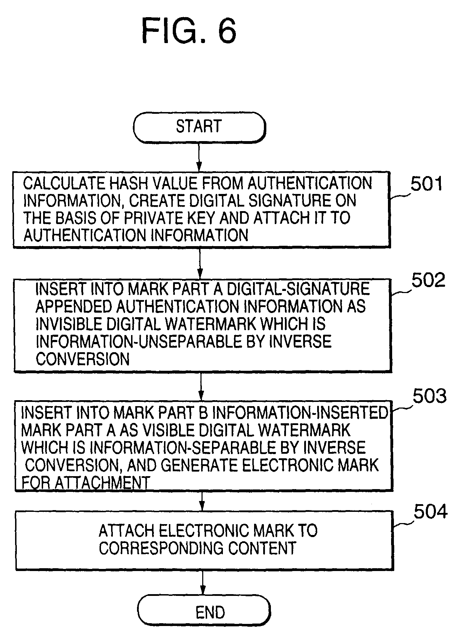

Fig. 6 shows the procedure of the processing executed by the mark-pasted content generating device 100.

First, the content 109, the authentication information 110 including content information (URL of the content), authentication source information (Merchant A) and mark effective term information (19xx/yy/xx), the authentication source private key 108 for digital signature, and a mark part A (Merchant A) 111 and a part B 112 are beforehand stored in the storage unit 103.

When the input/output unit 104 receives an information-appended electronic mark creating request, the controller 105 actuates the information insertion unit 106.

The information insertion unit 106 thus actuated first calculates the hash value of the authentication information 110, encrypts the hash value with the private key 108 to generate a digital signature and adds it to the authentication information 110, thereby creating the authentication information 403 with the digital signature of Fig. 5 (step 501). Subsequently, the authentication information 403 with the digital-signature is embedded in an unseparable and invisible digital watermark style into the mark part A 111 representing partial information (for example, authentication source) of the authentication information (step 502). Thereafter, the mark part A 111 is embedded into the mark part B (for example, trademark) 112 in a digital watermark style which is separable through the inverse conversion processing and visualized (for example, visualizing digital watermark using brightness information), thereby generating information-appended electronic mark 113 (step 503). This is because the mark part A 111 is set as a certification display for the genuineness in which the authentication information is visualized.

Here, the invisible digital watermark means a digital watermark obtained by embedding information as a digital watermark so that the content of information to be embedded cannot be visually recognized, and the visible digital watermark means a digital watermark obtained by embedding an image as a digital watermark into another image so that an image pattern of the image to be embedded can be visually recognized. The inverse-transform separable watermark style means a watermark style in which information is watermarked by a specific brightness conversion processing and then an image embedded as the digital watermark can be separated by the inverse conversion processing.

Subsequently, the controller 105 actuates the mark pasting unit 107, and the mark pasting unit 107 pastes the information-appended electronic mark 113 to the content 109 by defining URL of the file of the information-appended electronic mark (for example, a URL of GIF file) in an image tag of HTML, thereby generating the mark-pasted content 114 (step 504).

Next, the operation of the content check device 200 will be described.

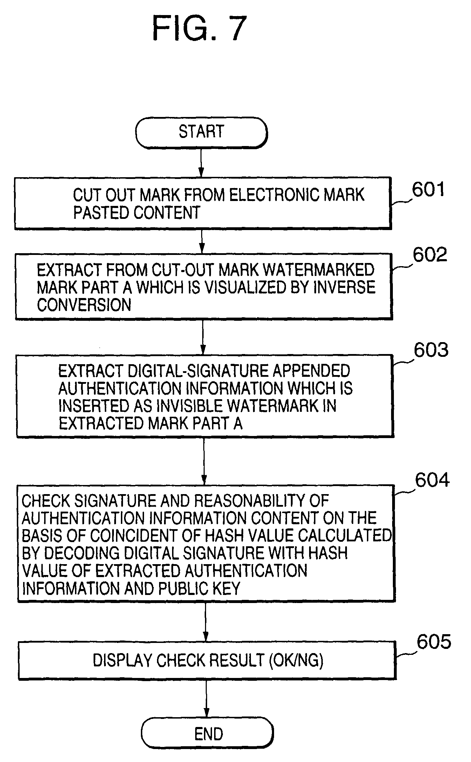

Fig. 7 shows the procedure of the operation of the content check device 200.

Here, the mark-pasted content 210 and the public key 214 of the mark authentication source are beforehand stored in the storage device 203. Upon receiving a check request through the input/output unit 204 when the mark-pasted content 210 is displayed by the browser program described above, the controller 204 actuates the mark cut-out unit 206.

The mark cut-out unit 206 thus actuated cuts out the information-appended electronic mark 212 from the mark-pasted content 210 (step 601), and the controller 204 actuates the information extraction unit 207.

The information extraction unit 207 separates and extracts from the information-appended electronic mark 212 the mark part A 111 which has been embedded as a visible digital watermark through the inverse conversion (step 602), and extracts as the extraction information 213 the digital-signature appended authentication information which has been inserted in the mark part A 111 as an invisible digital watermark (step 603). The controller 205 actuates the digital signature check unit 208.

The digital signature check unit 208 checks the genuineness and reasonability of the mark-pasted content 210 on the basis of the coincidence between the hash value of the authentication information of the digital-signature appended authentication information and the hash value calculated by decrypting the digital signature of the digital-signature appended authentication information with the public key 214, the coincidence between the content information (URL) contained in the authentication information of the digital-signature appended authentication information and the information (URL) of the mark-pasted content 210 and the effectiveness of the effective term contained in the authentication information of the digital-signature appended authentication information, and generates a check result (OK/NG) 215 (Step 604).

Finally, the controller 205 actuates the genuineness expression information selecting/composing unit 216, generates the genuineness expression information 216 (for example, a check result text message) to display the check result (OK/NG) 215, and then outputs it to the input/output unit 204 (step 605).

The foregoing description is made on the first embodiment.

As described above, according to the first embodiment, the genuineness of a main electronic mark such as a trademark or the like and a content can be expressed to be visually recognizable by the presence or absence of a sub-electronic mark which is embedded as a visible digital watermark in the main electronic mark, and also the genuineness can be strictly authenticated by the digital-signature appended authentication information which is embedded as an invisible digital watermark in the main electronic mark such as a trademark or the like.

Next, a second embodiment of the present invention will be described.

According to the second embodiment, the following modifications are made on the processing of creating the information-appended electronic mark 113 which is executed by the information insertion unit 106 of the mark-pasted content generating device 100 of the first embodiment and the processing of extracting the extraction information 213 from the information-appended electronic mark 212 in the information extraction unit 207 of the content check device 200.

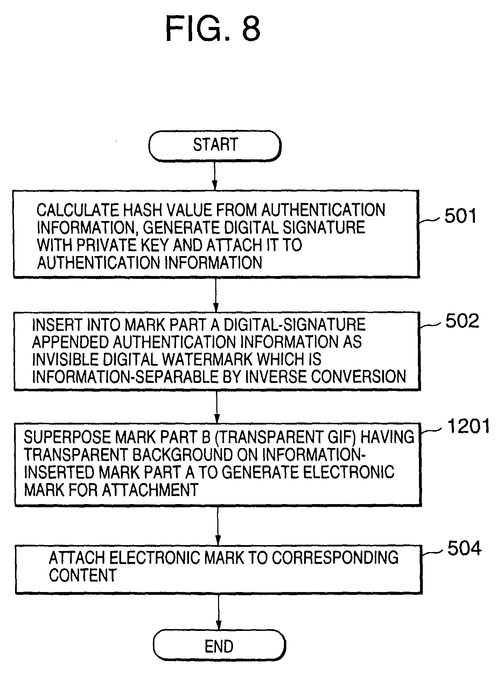

Fig. 8 shows the procedure of the processing executed by the mark-pasted content generating device 100.

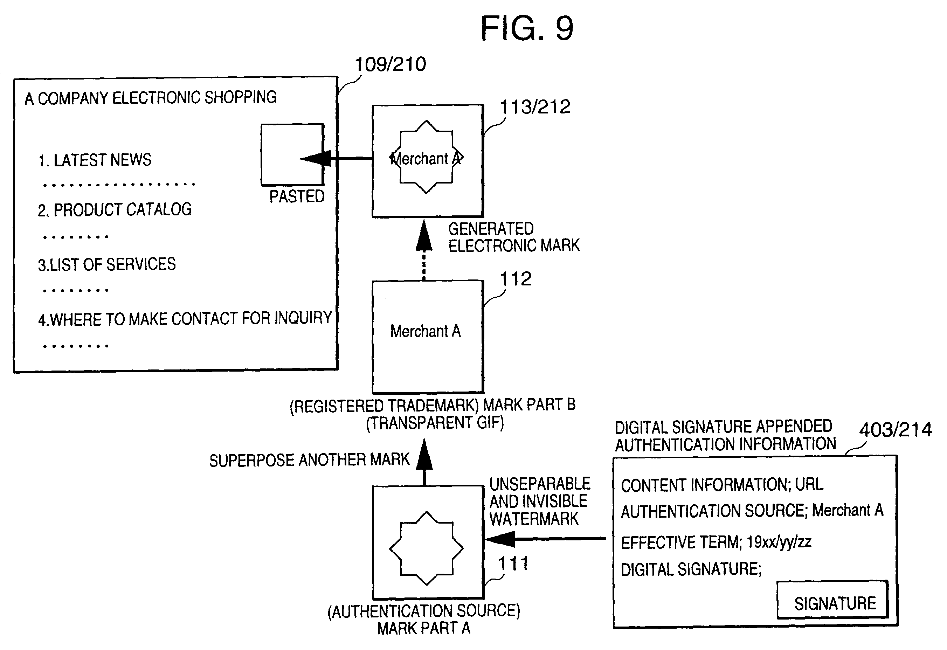

In this embodiment, the information insertion unit 106 creates the digital-signature appended authentication information 403 of Fig. 9 in the same manner as the first embodiment (step 501). Subsequently, the digital-signature appended authentication information 403 is embedded into the mark part A 111 (for example, a trademark) as an unseparable and invisible digital watermark (step 502), and then a mark part B 112 which has the transparent background and represents partial information (for example, an authentication source) of the authentication information is superposed on the mark part A 111 to generate an information-appended electronic mark 113 having a two-layer structure (step 1201). The information-appended electronic mark 113 thus generated is an image in which the image pattern of the mark part A 111 appears in most of the background portion of the mark part B 112. The mark pasting unit 107 pastes the information-appended electronic mark 113 to the content 109 to generate a mark-pasted content 114 (step 504).

When the mark part B is overlaid on and pasted to the mark part A 111 in which the digital-signature appended authentication information as described above is embedded, the following process is performed.

That is, an HTML description in which the content of a table containing the mark part A 111 in which the digital-signature appended authentication information 403 is embedded as a background image is set as the mark part B 112 is created. In this case, the mark part B 112 is embedded is assumed as a transparent GIF file. The description of the table as described above is inserted into the HTML description of a Web page.

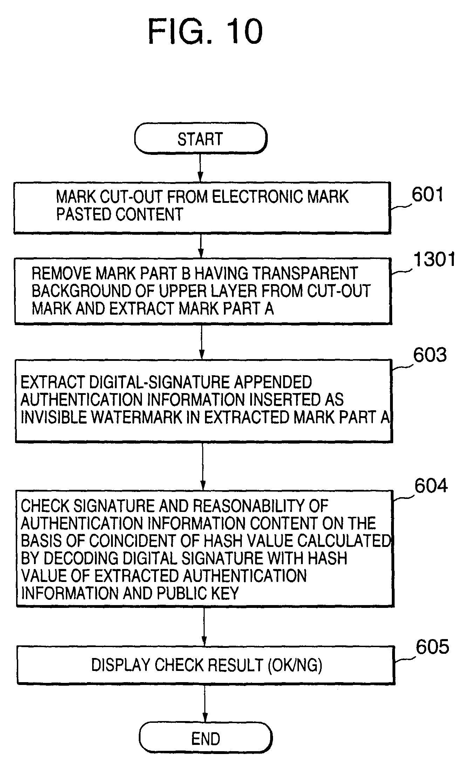

Fig. 10 shows the procedure of the operation of the content check device 200 according to the second embodiment.

As shown in Fig. 10, in this processing, the information-appended electronic mark 212 is cut out from the mark-pasted content 210 as in the case of the first embodiment (step 601). The information extraction unit 207 removes the mark part B from the information-appended electronic mark 212 to separate and extract the mark part A 111 (step 1301), and extracts as the extraction information 213 the digital-signature appended authentication information which is inserted as an invisible digital watermark into the mark part A 111 (step 603). As in the case of the first embodiment, the digital signature check unit 208 checks the genuineness and reasonability of the mark-pasted content 210 (step 604), and the genuineness expression information selecting/composing unit 216 generates the genuineness expression information 216 (for example, a check result text message) and outputs it from the input/output unit 204 (step 605).

The above-described second embodiment may be implemented in the following mode.

That is, the information extracting unit 207, the digital signature check unit 208 and the genuineness expression information selecting/composing unit 216 of the content check device 200 are provided as extension programs of the server program on the WWW server which makes the Web page (mark-pasted content 114) on the Internet. The other portions of the content check device 200 are provided as the plug-in programs of the browser programs browsing the Web page at the client side at which the browser program runs.

The WWW server sets at least the mark part A 111 embedded with the unseparable and invisible digital watermark serving as the background image of the table in a no-cache indication mode (a mode of indicating prohibition of storage of data into local cache of a client) by a proper program through CGI and feeds the Web page (mark-pasted content 114),. The direct access to the mark part A 111 embedded with the unseparable and invisible digital watermark serving as the background image of the table by the client is rejected by the proper program through CGI.

Accordingly, the client cannot copy the mark part A 111 embedded with the unseparable and invisible digital watermark serving as the background image of the table by using a normal copying procedure, and thus an unauthorized person who accesses the mark-pasted content 114 as a client can be prohibited from illegally copying and using the mark part A 111.

On the other hand, at the client side, the plug-in program actuated from the browser program requests to the Web server the check of the information-appended electronic mark 212 indicated by the user on the Web page. The extension program on the server program on the Web server receiving the request checks the genuineness and reasonability of the Web page (mark-pasted content 114) from the information-appended electronic mark 212 on the Web server as described above, generates the genuineness expression information (for example, check result text message) and then outputs it to the client. The plug-in program of the browser program at the client side displays it.

The foregoing description is made on the second embodiment of the present invention.

As described above, according to the second embodiment, the genuineness of the electronic mark such as a trademark or the like and the content can be expressed so as to be visually recognizable by the presence or absence of the display of an electronic mark having a transparent background which is overlaid on the electronic mark, and also the genuineness can be strictly authenticated on the basis of the digital signature appended authentication information which is embedded as an invisible digital watermark into an electronic mark such as a trademark or the like. Further, by supplying an electronic mark such as a trademark or the like to a client in the no-cache indication mode described above, the copying of the electronic mark can be prevented, and thus illegal use can be prevented.

Next, a third embodiment of the present invention will be described hereunder.

In the third embodiment, the following modifications are made to the processing of creating the information-appended electronic mark 113 executed by the information insertion unit 106 of the mark-pasted content generating device 100 of the first embodiment, and the processing of extracting the extraction information 213 from the information-appended electronic mark 212 in the information extraction unit 207 of the content check device 200 of the first embodiment. Further, in place of the mark part B 112, mark genuineness/type indication brightness/chroma (color) information 1403 is beforehand stored in the storage unit 103 of the mark-pasted content generating device 100, and mark genuineness/type indication brightness/chroma information 1404 is beforehand stored in the storage unit 103 of the content generating device 100.

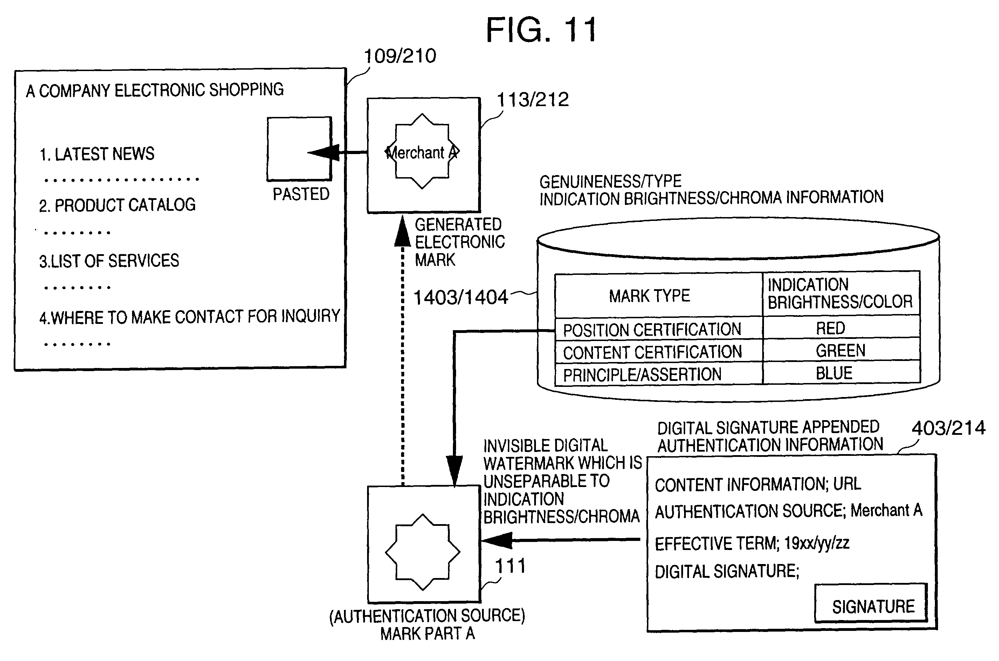

As shown in Fig. 11, the mark genuineness/type indication brightness/chroma information 1403, 1404 defines the corresponding relationship between the authentication type and the brightness/chroma value contained in the authentication information 110, and the mark genuineness/type indication brightness/chroma information 1403 and the mark genuineness/type indication brightness/chroma information 1404 have the same content.

In the third embodiment, the information insertion unit 106 of the mark-pasted content generating device 100 embeds the digital-signature appended authentication information 403 obtained by adding the digital signature to the authentication information containing an authentication type (for example, position certification) in an invisible digital watermark style into the mark part A 111 (trademark) at a differential portion between predetermined brightness/color and the brightness/chroma of the mark part A 111 so that at least a part of the mark part A 111 has the brightness/chroma (for example, red color for position certification in case of trademark) corresponding to the authentication type indicated by the mark genuineness/type indication brightness/chroma information 1403 to the extent that it can be visually recognized by the human, thereby generating the information-appended electronic mark 113.

The information extraction unit 207 of the content check device 200 extracts as the extraction information the digital-signature appended authentication information 214 which is embedded as an invisible digital watermark in the information-appended electronic mark 212. At this time, it may be checked whether the brightness/chromaticities of at least a part of the information-appended electronic mark 212 as described above is the brightness/color registered in the mark genuineness/type indication brightness/chroma information 1404, and then the check result may be displayed.

As described above, according to the third embodiment, the genuineness of the electronic mark and the content or the type of the genuineness can be expressed so as to be visually recognizable by the brightness/color of the electronic mark such as a trademark or the like, and also the genuineness can be strictly authenticated by the digital-signature appended authentication information embedded as an invisible digital watermark.

The following modifications may be made to the third embodiment.

That is, the brightness/color which is varied to the extent that the human cannot visually perceive to the brightness, color used in the electronic mark A is registered in association with the authentication type in the mark genuineness/type indication brightness/chroma information 1403, 1404, and it is embedded as an invisible digital watermark at this brightness, color potion. Specifically, the brightness/color whose variation is perceived as white by the human is registered. This brightness/color is embedded at a white portion of the electronic mark A, whereby the content check device 200 can recognize the authentication type on the basis of the brightness/color of the information-appended electronic mark and makes it invisible to the human. This method may be used to classify many electronic marks in accordance with the authentication type on the basis of the brightness/color thereof.

The foregoing description is made on the third embodiment.

Next, a fourth embodiment of the present invention will be described.

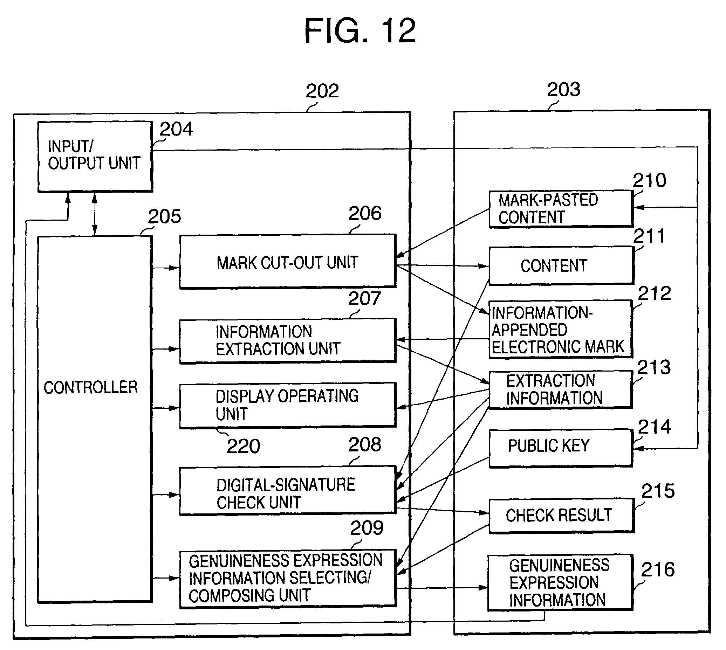

The fourth embodiment is similar to that of Fig. 2 in the construction of the mark-pasted content generating device 100, however, it is different in the processing of creating the information-appended electronic mark 113 which is executed by the information insertion unit 107. The content check device 200 according to the fourth embodiment has the construction shown in Fig. 12. That is, the construction of the content check device 200 according to the fourth embodiment is substantially the same as the construction of the content check device shown in Fig. 3, however, it is different in that a display operation unit 220 is provided to the operating unit 202.

First, the operation of the mark-pasted content generating device 100 will be described.

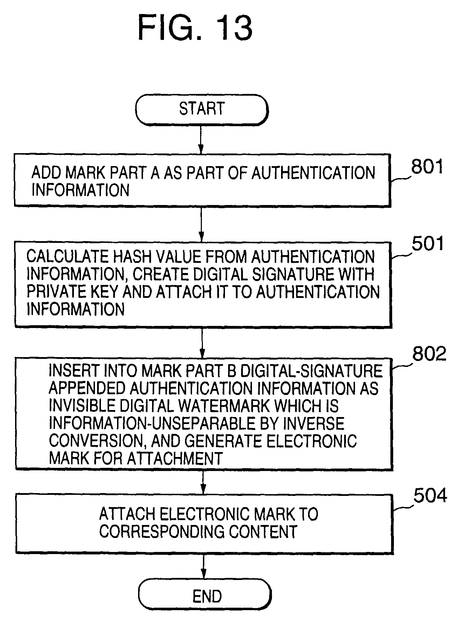

Fig. 13 shows the procedure of the operation of the mark-pasted content generating device 100. The procedure of creating the information-appended electronic mark 113 executed by the information insertion unit 107 as shown in Fig. 13 will be described.

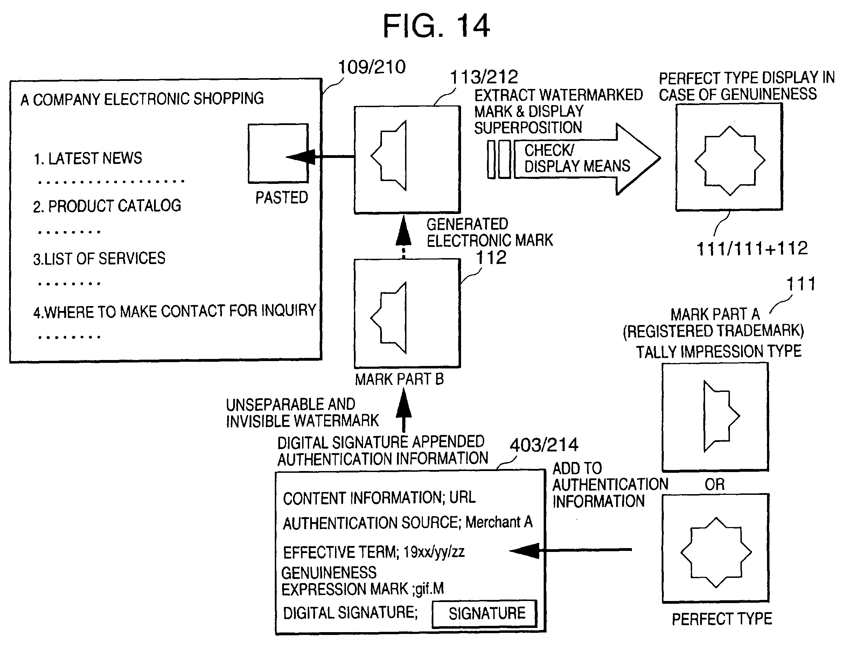

As shown in Fig. 14, the information insertion unit 106 first contains the data of the mark part A 111 into the authentication information 110 (step 801). Here, the mark part A is a perfect mark (for example, a perfect trademark) or a tally impression type mark which is a divisional part of a perfect mark and constitutes the perfect mark when it is combined with the other divisional mark B 112. The information insertion unit 107 creates the digital-signature appended authentication information 403 added with the digital signature of the authentication information containing the electronic mark A 111 (step 501). Subsequently, the digital-signature appended authentication information 403 is embedded into the mark part B 112 in an unseparable and invisible digital watermark style to generate the information-appended electronic mark 113 (step 802). The mark pasting unit 107 pastes the information-appended electronic mark 113 to the content 109 to generate the mark-pasted content 114 (step 504).

Next, the operation of the content check device 100 will be described.

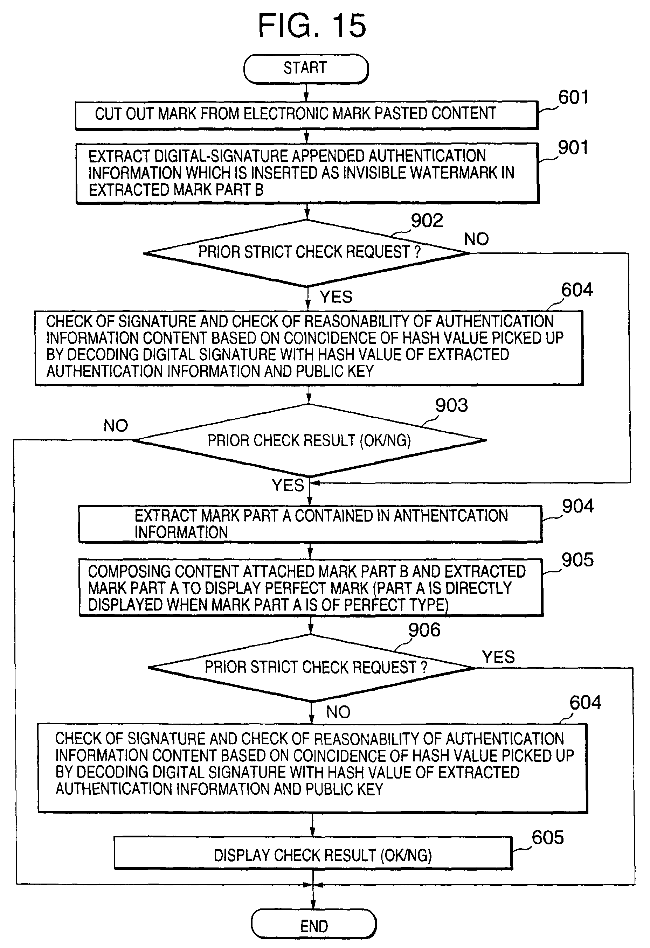

Fig. 15 shows the procedure of the operation of the content check device 100.

The mark cut-out unit 206 first cuts out the information-appended electronic mark 212 from the mark-pasted content 210 (step 601). The digital-signature appended authentication information embedded as an invisible watermark is extracted as the extraction information 214 from the information-appended electronic mark 212 by the information extraction unit 207 (step 901).

Here, when a prior strict check request is set in advance (step 902), the digital signature check unit 208 checks the genuineness and reasonability of the mark-pasted content 210 on the basis of the coincidence between the hash value of the authentication information of the digital signature appended authentication information, the hash value calculated by decrypting the digital signature of the digital signature appended authentication information and the public key 214, the coincidence between the content information (URL) contained in the authentication information of the digital signature appended authentication information and the information (URL) of the mark-pasted content 210 and the effectiveness of the effective term contained in the authentication information of the digital signature appended authentication information (step 604). If the check result is NG (step 903), the genuineness expression information selecting/composing unit 216 generates genuineness expression information 216 (for example, check result text message) for displaying the check result (NG) 215, and outputs it from the input/output unit 204 (step 605). If the check result is OK (step 903), the display operating unit 220 picks up the electronic mark A contained in the authentication information. If the electronic mark is a perfect type mark, the electronic mark A is displayed on the Web page in place of the electronic mark B. On the other hand, if the electronic mark is a tally impression type mark, the electronic mark A is combined with the electronic mark B to display the perfect type mark on the Web page.

On the other hand, when no prior strict check request is set (step 902, 906), the display operating unit 220 picks up the electronic mark A contained in the authentication information. If the electronic mark is a perfect type mark, the electronic mark A is displayed on the Web page in place of the electronic mark B. If the electronic mark is a tally-impression type mark, the electronic mark A and the electronic mark B are combined with each other to display the perfect type mark on the Web page. Thereafter, the digital signature check unit 208 checks the genuineness and reasonability of the mark-pasted content 210 on the basis of the coincidence between the hash value of the authentication information of the digital signature appended authentication information and the hash value calculated by decrypting the digital signature of the digital signature appended authentication information with the public key 214, the coincidence between the content information (URL) contained in the authentication information of the digital signature appended authentication information and the information (URL) of the mark-pasted content 210 and the effectiveness of the effective term contained in the authentication information of the digital signature appended authentication information (step 604), and the genuineness expression information selecting/composing unit 216 generates the genuineness expression information 216 (for example, check result text message) for displaying the check result (OK/NG) 215 and outputs it from the input/output unit 204 (step 605).

The foregoing description is made on the fourth embodiment of the present invention.

As described above, according to the fourth embodiment of the present invention, when no prior strict check request is set, the genuineness of an electronic mark such as a trademark or the like and a content or the type of the genuineness can be expressed so as to be visually recognizable by checking whether the electronic mark is displayed in a perfect style or not, and the genuineness can be strictly authenticated by the digital-signature appended authentication information which is embedded as an invisible watermark. Further, when a prior strict check request is set, the strict authentication result of the genuineness can be indicated by checking whether an electronic mark such as a trademark or the like is displayed in a perfect style or not.

Next, a fifth embodiment according to the present invention will be described.

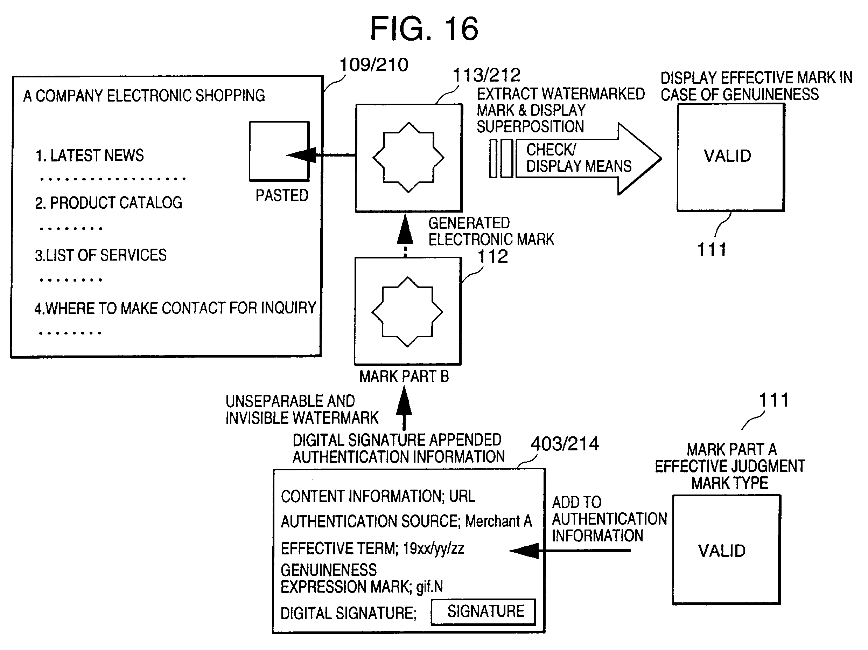

As shown in Fig. 16, the fifth embodiment of the present invention is designed so that the electronic mark B 112 of the fourth embodiment is a perfect type mark (a trademark or the like), the electronic mark A is a mark representing genuineness (for example, a validness mark) and the electronic mark A is displayed in place of the electronic mark B in step 905 of Fig. 15.

According to the fifth embodiment of the present invention, when no prior strict check request is set, the genuineness of the electronic mark and the content or the type of the genuineness can be expressed so as to be visually recognizable by checking whether the validness mark is displayed or not, and the genuineness can be strictly authenticated by the digital-signature appended authentication information embedded as an invisible watermark. On the other hand, when a prior strict check request is set, the strict authentication result of the genuineness can be indicated by the validness mark.

As described above, according to the present invention, the genuineness of the electronic data can be strictly authenticated, and the genuineness can be visually expressed to the users of the electronic data.

## Claims

1. A method of generating authentication-enabled electronic data, comprising the steps of:
embedding digital-signature appended authentication information for authenticating the electronic data as an invisible digital watermark into a first image and subjecting the first image with the invisible digital watermark to a visually-recognizable alteration to generate a second image; and
inserting the second image into the electronic data to generate the authentication-enabled electronic data.

2. A method of generating authentication-enabled electronic data, comprising the steps of:
embedding digital-signature appended authentication information for authenticating electronic data as an invisible digital watermark into a first image to generate a second image;
embedding the second image as a visible digital watermark into a third image to generate a fourth image; and
inserting the fourth image into the electronic data to generate the authentication-enabled electronic data.

3. A method of generating authentication-enabled electronic data, comprising the steps of:
embedding digital-signature appended authentication information for authenticating electronic data as an invisible digital watermark into a first image to generate a second image;
superposing the second image and a third image on each other so that the image pattern of the third image and the image pattern of the second image are visually recognizable, thereby generating a fourth image having a double-layer structure; and
inserting the fourth image into the electronic data to generate the authentication-enabled electronic data.

4. A method of generating authentication-enabled electronic data, comprising the steps of :
embedding digital-signature appended authentication information for authenticating electronic data as an invisible digital watermark into a first image so that the brightness or chromaticities of the image has a predetermined visually-recognizable characteristic, thereby generating a second image; and
inserting the second image into the electronic data to generate the authentication-enabled electronic data.

5. A method of generating authentication-enabled electronic data, comprising the steps of:
embedding digital-signature appended authentication information for authenticating electronic data and first image data as an invisible digital watermark into a second image to generate a third image; and
inserting the third image into the electronic image to generate the authentication-enabled electronic data.

6. A method of generating an authentication-enabled Web page to be supplied from a Web server to a client, comprising the steps of:
embedding digital-signature appended authentication information for authenticating a Web page as an invisible watermark into a first image to generate a second image;
superposing a third image having a transparent portion on the second image thus generated to generate a fourth image having a double-layer structure;
inserting the fourth image into the Web page to generate the authentication-enabled Web page; and
describing as processing of said Web server a description of supply of the Web page containing the fourth image to the client when the client accesses the authentication-enabled Web page, and a description of non-supply of the second image when the client directly accesses the second image.

7. A method of checking the authentication-enabled electronic data generated by the method as claimed in claim 4, comprising the steps of:
measuring the brightness or chromaticities of the second image contained in the authentication-enabled electronic data; and
checking whether the brightness or chromaticities thus measured has the predetermined characteristic, and outputting the check result.

8. A method of displaying the authentication-enabled electronic data generated by the method as claimed in claim 5, comprising the steps of:
extracting the data of the first image embedded as the digital watermark from the third image contained in the authentication-enabled electronic data; and
including the display of the first image represented by the first image data extracted or the combined display of the display of the first image and the display of the third image in the display of the authentication-enabled electronic data in place of the display of the third image.

9. A method of authenticating the authentication-enabled electronic data generated by the method as claimed in claim 5 and displaying a check result, comprising the steps of:
authenticating the electronic data by using authentication information and a digital signature embedded as a digital watermark in the third image contained in the authentication-enabled electronic data; and
extracting the data of the first image embedded as a digital watermark from the third image contained in the authentication-enabled electronic data when the electronic data can be authenticated; and
including the display of the first image represented by the first image data extracted or the combined display of the display of the first image and the display of the third image in the display of the authentication-enabled electronic data in place of the display of the third display.

10. An authentication-enabled electronic data generating device for generating authentication-enabled electronic data comprising:
means for embedding digital-signature appended authentication information for authenticating electronic data as an invisible digital watermark into a first image and subjecting the first image with the invisible digital watermark to a visually-recognizable alteration to generate a second image; and
means for inserting the second image into the electronic data to generate a mark-pasted electronic data as the authentication-enabled electronic data.

11. A storage medium in which a program to be read out and executed by an electronic computer is stored, wherein:
said program makes said electronic computer execute:
a step of embedding digital-signature appended authentication information for authenticating the electronic data as an invisible digital watermark into a first image, and generating a second image which has been subjected to a visually-recognizable alteration; and
a step of inserting the second image into the electronic data to generate the authentication-enabled electronic data.

12. An authentication system for authenticating electronic data, comprising an authentication-enabled electronic data generating device and an electronic data authenticating device, wherein:
said authentication-enabled electronic data generating device includes:
means for embedding digital-signature appended authentication information for authenticating electronic data as an invisible digital watermark into a first image and subjecting the first image with the invisible digital watermark to a visually-recognizable alteration to generate a second image; and
means for generating as the authentication-enabled electronic data mark-pasted electronic data obtained by inserting the second image into the electronic data, and
said electronic data authentication device includes:
means for performing a display operation containing the display of the second image of the authentication-enabled electronic data; and
means for authenticating the authentication-enabled electronic data on the basis of the digital-signature appended authentication information which is extracted from the second image and embedded as a digital watermark.
